# EUROPEAN PATENT SPECIFICATION

(11) **EP 4 052 823 B1**
(45) Date of publication and mention of the grant of the patent: **25.11.2026**
(21) Application number: 21160194.3
(22) Date of filing: 02.03.2021
(51) Int. Cl.: B23C 5/00, B23C 5/20, B23C 5/06, B23C 5/08

(54) **METAL CUTTING MILLING TOOL**
METALLSCHNEIDENDES FRÄSWERKZEUG
OUTIL DE FRAISAGE DE DÉCOUPE MÉTALLIQUE

(43) Date of publication of application: 07.09.2022
(73) Proprietor: AB Sandvik Coromant, 811 81 Sandviken (SE)
(72) Inventor: BERGMAN, Stefan, 811 81 Sandviken (SE); ROMAN, Stefan, 811 81 Sandviken (SE)
(74) Representative: Sandvik

(56) References cited:
- EP-A1- 2 368 658
- JP-A- 2007 268 693
- US-A1- 2020 198 019

## Description

### TECHNICAL FIELD

The present invention relates to a metal cutting milling tool, more particular to a metal cutting milling tool with differential pitch for suppressing vibrations during use.

### BACKGROUND

Vibrations, also known as chatter, is a common problem during milling of materials such as titanium, steel, aluminium and castings. The vibrations correspond to the relative movement between the workpiece and the milling tool and result in unwanted irregularities/waves in the machined surface.

The problem with vibrations can to some extent be solved by using differential pitch. Differential pitch means that there are different angles between two adjacent cutting inserts around the circumference of the milling tool. By having differential pitch the engagement frequency of the cutting inserts can be varied and this reduces the risk of self-oscillation of the milling tool and the vibrations can thus be reduced.

EP2335853 discloses a milling tool with differential pitch. The milling tool disclosed incorporates differential pitch by having different angles between the cutting inserts along the circumference of the milling tool. The cutting inserts are also positioned at different radial distances from the rotation axis to achieve more even chip thickness and accordingly a reduced load on the cutting inserts.

This known tool works well for most applications. However, in certain applications, the tool may have problems relating to balancing and strength that sometimes may lead to tool failure.

Therefore, it is a need for improvements in a metal cutting milling tool to alleviate some of the above-mentioned problems while still maintaining differential pitch in the milling tool.

It is therefore an object of the present invention to present an improved metal cutting milling tool with differential pitch that alleviates some of the above-mentioned problems.

### SUMMARY

According to the present invention, the above-mentioned object is achieved by means of a metal cutting milling tool having the features defined in claim 1.

The metal cutting milling tool according to the present invention comprises: a body that is rotatable around a central axis in a rotational direction and comprising a front end, a plurality of land portions extending axially rearwards from the front end and a plurality of chip rooms extending axially rearwards from the front end. Each chip room of the plurality of chip rooms is positioned between two adjacent land portions of the plurality of land portions. Each land portion of the plurality of land portions is delimited by a leading and a trailing surface as seen in the rotational direction, the leading surface being rotationally ahead of the trailing surface and each land portion, as part of the leading surface, in a radially outer and forward region comprises an insert seat for receiving a cutting insert. At the front end of the milling tool, in a plane perpendicular to the central axis, an angle between a radius intersecting a radially outer point in the insert seat of a first land portion and a radius intersecting a corresponding point in the insert seat of a second land portion defines a seat pitch angle for the first land portion. The first land portion and a second land portion are adjacent consecutive land portions in the rotational direction. At least three different land portions of the plurality of land portions have seat pitch angles that differ in value. At the front end of the milling tool, each land portion has a respective arc length defined by the circumferential distance along the radial periphery of the milling cutter between the insert seat and the trailing surface for respective land portion. The longest arc length is at most 10 % longer than the shortest arc length.

The present inventors have realized that this configuration alleviates the problem of balancing of the milling cutter and the problem of having some land portions with considerably less strength than the other land portions. Since the arc length for each land portion differ by at most 10 % compared to all other land portions the amount of material behind all insert seats is approximately the same. Since this material is positioned furthest from the central axis of the milling cutter it affects the balance of the cutter to a large extent. Having the arc length differ by at most 10 % between the land portions usually implies that it is difficult to achieve differential pitch to reduce vibrations. However, the present configuration with seat pitch angles that differ in value alleviates this problem and makes it possible to achieve differential pitch while having a balanced milling tool where the strength between the land portions is evenly distributed and none of the land portions is considerably weaker than the other land portions.

Having at least three seat pitch angles that differ in value, i.e. they are unequal, ensures that the milling tool is enabled for differential pitch to reduce vibrations.

Insert seat more specifically refers to the insert seat bottom, i.e. the surface of the insert seat that is in contact with the lower side of the cutting insert. The lower side of the cutting insert being defined as the surface opposite the upper side of the cutting insert where the upper side comprises a rake surface. The insert seat is not necessarily one flat surface but is defined as the area enclosed by the points on the insert seat bottom that will be in contact with a cutting insert having a flat lower side. The insert seat can thus, for example, be a concave surface where only the outer points of the insert seat is in contact with a cutting insert.

According to one embodiment, the milling tool further comprises cutting inserts that are positioned one in each of the insert seats and wherein all the cutting inserts are identical.

Generally, the cutting inserts used can be of any type and does not necessarily need to be identical. It is, however, preferred to use cutting inserts that all have the same thickness. More preferred is to use cutting inserts that are all identical.

This configuration implies that all cutting inserts have the same thickness which results in that the pitch angles for the cutting edges of the cutting inserts will be the same as the optimized seat pitch angles. This leads to a better reduction of vibrations during use of the milling cutter. Having all inserts identical also greatly simplifies handling of the inserts when they are to be exchanged.

According to one embodiment, at the front end of the milling tool, in a plane perpendicular to the central axis, a line parallel to the upper side of a cutting insert and a line parallel to the trailing surface, associated with the same chip room as the cutting insert, of the adjacent land portion, defines an opening angle for respective cutting insert. At least three of the opening angles differ in value, i.e. they are unequal.

This configuration enables having arc lengths that are similar in length while still achieving better reduction of vibrations during use of the milling tool.

Preferably, all opening angles differ in value.

With this configuration an even better reduction of vibrations during use of the milling tool is achieved.

According to one embodiment, all opening angles are within 60 - 100°.

This embodiment only applies to milling tools with up to 5 cutting inserts.

With this configuration, the chip room is large enough to be able to efficiently transport chips away from the machined surface and at the same time a sufficient amount of material is kept in the milling tool to maintain the strength of the milling tool.

According to one embodiment, the insert seats each comprise a screw hole for fixing one of the cutting inserts and the screw hole extends transverse to the insert seat. All screw holes are through holes.

The cutting inserts can be fixed to the insert seats in many ways, i.e. by clamping or by a fastening element, such as a screw, that passes through a central hole in the cutting insert and is inserted into either a blind hole or a through hole that extends from the insert seat. Preferably, the cutting inserts are fixed by screws inserted into threaded through holes.

An advantage with this configuration is that manufacturing of the milling tool is simplified since the drilling and the threading of the screw hole can be made from two directions. Another advantage is that the screw hole can be made longer, and longer screws can be used. This will improve the stability of the cutting inserts in the insert seats.

Preferably, all screw holes extend at the same angle to their respective insert seat.

According to one embodiment, all screw holes extend from a chip room to an adjacent chip room in the rotational direction. The screw holes thus have their opening in one chip room and their end point in an adjacent chip room.

According to one embodiment, the longest screw hole is at most 10 % longer than the shortest screw hole.

Preferably, the longest screw hole is at most 5 % longer than the shortest screw hole.

The combination of having the longest screw hole being at most 10 % longer than the shortest screw hole and the screw holes being transverse to the insert seats implies that all screw holes will end in approximately the same position in its respective chip room or respective arc length of a land portion. This simplifies manufacturing of the milling tool since it will be easier to position a manufacturing robot in the correct position for drilling or threading the holes.

According to one embodiment, the longest arc length is at most 5 % longer than the shortest arc length.

With this configuration the balance of the milling cutter will be even more improved and the strength between the land portions will be even more equal.

According to one embodiment, the shortest arc length is at least as long as the thickness of the cutting inserts.

This configuration ensures that the arc lengths and therefore the thicknesses of the land portions are sufficient for having a screw hole and a screw of a length long enough to stabilize the cutting insert in the insert seat.

Even more preferred is to have a shortest arc length that is at least 1,5 times the thickness of the cutting inserts.

The thickness of the cutting insert is defined as the distance between the upper side of the cutting insert and the lower side of the cutting insert.

According to one embodiment, the largest seat pitch angle is at least 5° larger than the smallest seat pitch angle.

This configuration further improves the milling tools tendency to reduce vibrations.

According to one embodiment, the largest seat pitch angle is at least 8° larger than the smallest seat pitch angle.

This configuration even further improves the milling tools tendency to reduce vibrations.

According to one embodiment, all seat pitch angles have different values.

This configuration even further improves the milling cutters tendency to reduce vibrations.

According to one embodiment, all cutting inserts are positioned at the same radial distance from the central axis.

This configuration ensures that all cutting inserts will be in operation during milling regardless of what tooth feed and feed speed that is used.

According to one embodiment, the milling tool is an end milling tool.

This configuration ensures that the milling cutter is suitable for performing square shoulder milling or face milling.

According to one embodiment, the milling tool is a slot milling tool.

This configuration ensures that the milling cutter is suitable for slot milling operations.

Further advantages of the present invention will appear from the description following below.

### LIST OF DRAWINGS

Embodiments of the invention will now be described in detail with regard to the annexed drawings, in which:
Fig. 1 is a side view of the metal cutting milling tool according to an embodiment of the present invention,
Fig. 2 is another side view of the metal cutting milling tool shown in Fig. 1 with cutting inserts attached to the milling tool,
Fig. 3 is an end view of the metal cutting milling tool shown in Fig. 2 showing the front end of the milling tool, and
Fig. 4a-c are cross sections of the metal cutting milling tool as indicated in Fig. 1.
Fig. 5 is a cross section of the metal cutting milling tool as indicated in Fig. 1.

### DETAILED DESCRIPTION OF EMBODIMENTS

The following definitions are valid for all embodiments.

A seat pitch angle α is defined as the angle between a radius intersecting a radially outer point in the insert seat of a first land portion and a radius intersecting a corresponding point in a second land portion where the first land portion and the second land portion are adjacent consecutive land portions in the rotational direction.

An arc length AL is defined at the front end of the milling tool for each land portion as the circumferential distance along the radial periphery of the milling tool between the insert seat and the trailing surface for respective land portion.

A pitch angle β is defined as the angle between a line parallel to the upper side of a first cutting insert at the front end of the milling tool in a plane perpendicular to the central axis C and a similar parallel line to the upper side of a second insert where the second insert is an adjacent consecutive insert in the rotational direction of the milling tool.

An opening angle γ for respective cutting insert is defined as the angle between a line parallel to the upper side of a cutting insert at the front end of the milling tool in a plane perpendicular to the central axis C and a line parallel to the trailing surface, associated with the same chip room as the cutting insert, of the adjacent land portion.

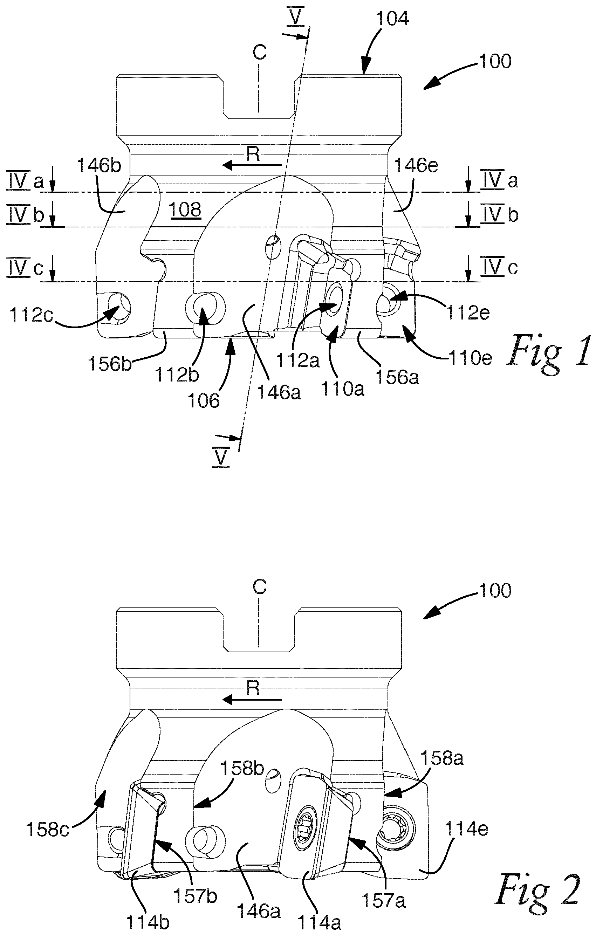

Reference is now made to Fig. 1 and Fig. 2 which show an embodiment according to the present invention. In the figure a metal cutting milling tool, generally designated 100, is shown. The metal cutting milling tool 100 having a rear end 104 for attachment in a rotatable tool holder (not shown), a front end 106 and a peripheral envelope surface 108. In this embodiment the peripheral envelope surface 108 is generally cylindrical in the region closest to the front end 106 and generally conical in the region approximate the cylindrical region.

The milling tool defines a central axis C, also being a longitudinal axis around which the milling tool rotates in rotational direction R. In the following description directions stated to be axially extending are in a direction substantially parallel to the central axis C and directions stated to be radially extending are in a direction substantially perpendicular to the central axis C.

The metal cutting tool 100 further comprises tangentially spaced apart chip rooms 146 for transporting milled chips away from the machined work surface. In between each chip room 146 is a land portion 156 located. The land portions 156 function as wings extending radially from the central axis C. The land portions 156 form the radially outer periphery of the milling tool 100. In the shown embodiment the outer periphery of the land portions 156 extend in an axial direction in the area closest to the front end 106 and further to the rear end 104 the outer periphery of the land portions 156 approaches the central axis C.

Each land portion 156 is delimited in the rotational direction R by a leading 157 and a trailing surface 158. The leading surface 157 is rotationally ahead of the trailing surface 158. Each leading surface 157 forms part of the delimiting surface of a corresponding chip room 146 and part of the delimiting surface of a corresponding land portion 156. Corresponding here refers to that features marked "a" in the figures are associated to other features marked "a" and features marked "b" are associated to other features marked "b" and so on. Each trailing surface 158 forms part of the delimiting surface of a chip room 146 with trailing surface 158b forming part of delimiting surface of chip room 146a, trailing surface 158c forming part of delimiting surface of chip room 146b and so on. Further, each trailing surface 158 forms part of a delimiting surface of a corresponding land portion 156.

Each leading surface 157 having an insert seat 110 for detachably mounted cutting inserts 114. In this embodiment all cutting inserts 114 are positioned at the front end 106 of the milling tool 100. If the milling tool 100 is to be used for face milling each cutting insert 114 has at least one cutting edge which is extending in a radial direction. If the milling tool 100 is to be used for square shoulder milling each cutting insert has at least one cutting edge extending in a radial direction and one cutting edge extending in an axial direction. Face milling and square shoulder milling are herein collectively designated as end milling.

The cutting inserts 114 are in this embodiment mounted by fastening screws which are positioned in a throughgoing central hole in the cutting inserts and through a screw hole 112 in the milling tool 100. In the shown embodiment each screw hole 112 extend transverse the corresponding insert seat 110 and each screw hole 112 is a throughgoing hole. Each throughgoing screw hole 112 can be said to start in the insert seat 110 and end in either the radially outer surface of the land portion 156, in the trailing surface 158 or partially in the land portion 156 and partially in the trailing surface 158. As will be described in detail later all screw holes 112 will have approximately equal length and end in approximately the same position relative to its corresponding cutting insert 114, i.e. the screw holes 112 end will be at approximately the same axial position from the main front end 106 and at approximately the same tangential distance from respective insert seat 110 for each of the screw holes 112. According to the shown embodiment, the longest screw hole is at most 10 % longer than the shortest screw hole. More preferably, the longest screw hole is at most 5 % longer than the shortest screw hole. In the shown embodiment, all screw holes 112 extend at the same angle to their respective insert seat 110. The fact that the screw holes 112 are made as through holes simplifies the manufacturing of the milling tool 100 and makes it possible to have longer screw threads since the threading can be made from both sides of the hole. Having a longer screw thread makes it possible to have a cutting insert 114 which is more securely and stably mounted in the insert seat 110. The through hole configuration also simplifies exchanging the cutting inserts 114 since the screw can be pushed from the back if it is stuck in the hole. The advantage from the feature that all screw holes 112 have approximately equal length and end in approximately the same relative position is that manufacturing is greatly simplified since the drilling and threading of the holes can be made with the same tool for all screw holes 112 and this process is usually made by automatic robots and the positioning of the robot arm is made simpler if all screw holes 112 end in approximately the same relative position.

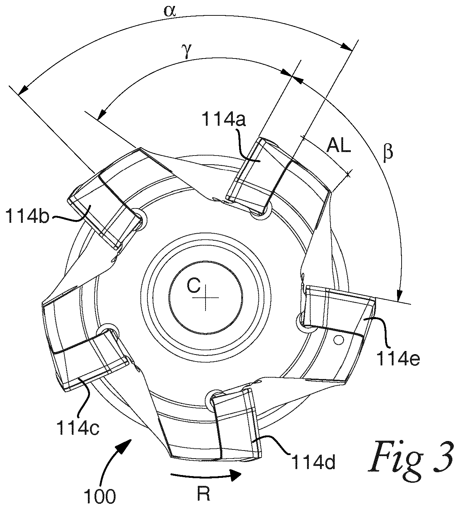

Reference is now made to Fig. 3 which shows an end view of the milling tool 100 from Figs. 1 and 2. A seat pitch angle α is defined as the angle between a radius intersecting a radially outer point in the insert seat 110 of a first land portion 156 and a radius intersecting a corresponding point in a second land portion 156 where the first land portion and the second land portion are adjacent consecutive land portions in the rotational direction.

At least three of the seat pitch angles α differ in value, i.e. they are unequal. More preferably four of the seat pitch angles α differ in value and most preferably all of the seat pitch angles α differ in value. Preferably the largest seat pitch angle α is at least 5° larger than the smallest seat pitch angle. More preferably, the largest seat pitch angle α is at least 8° larger than the smallest seat pitch angle. This configuration enables having a milling tool 100 with differential pitch between the cutting inserts 114, i.e. the engagement frequency of the cutting inserts varies when the milling tool rotates and machines the work material. This reduces the risk of self-oscillation of the milling tool 100 and vibrations is thus reduced. The larger the number of seat pitch angles α that differ in value and the larger the difference is between the largest and smallest seat pitch angle the better the tendency to reduce vibrations will be.

An arc length AL is defined at the front end 106 of the milling tool 100 for each land portion 156 as the circumferential distance along the radial periphery of the milling cutter between the insert seat 110 and the trailing surface 158 for respective land portion 156. The longest arc length AL is at most 10 % longer than the shortest arc length AL. Preferably, the longest arc length AL is at most 5 % longer than the shortest arc length AL. With this configuration the balance of the milling tool 100 is improved and the individual land portions 156 will have a more even strength compared to known milling tools with differential pitch. The amount of material behind all insert seats 110 will be more even compared to known milling tools with differential pitch and since this material is positioned furthest from the central axis C of the milling tool 100 it affects the balance of the milling tool 100 to a large extent. Further, the shortest arc length AL is preferably at least as long as the thickness of the cutting inserts 114 in order to secure sufficient strength for all land portions 156. The thickness of a cutting insert 114 is defined as the distance between the upper side of the cutting insert and the lower side of the cutting insert.

A pitch angle β is defined as the angle between a line parallel to the upper side of a first cutting insert 114 at the front end of the milling tool in a plane perpendicular to the central axis C and a similar parallel line to the upper side of a second insert where the second insert is an adjacent consecutive insert in the rotational direction of the milling tool 100. By using cutting inserts 114 that are all identical to each other the pitch angles β will be equal to the corresponding seat pitch angles α. This is a big advantage since the seat pitch angles α are optimized in respect to differential pitch and vibration reduction. Having all cutting inserts 114 identical also simplifies the handling of the inserts when the cutting inserts 114 are to be replaced since the risk of mixing up different types of cutting inserts is eliminated.

The cutting inserts 114 are preferably also all positioned at the same radial distance from the central axis C. The advantage of this is that all cutting inserts 114 will be in operation during milling regardless of what tooth feed and feed speed that is used.

An opening angle γ for respective cutting insert 114 is defined as the angle between a line parallel to the upper side of a cutting insert 114 at the front end 106 of the milling tool in a plane perpendicular to the central axis C and a line parallel to the trailing surface 158, associated with the same chip room 146 as the cutting insert 114, of the adjacent land portion 156. At least three, preferably all, of the opening angles γ differ in value. Further, the range of the opening angles γ are within 60 - 100°. This configuration even further improves the milling tools 100 ability to reduce vibrations.

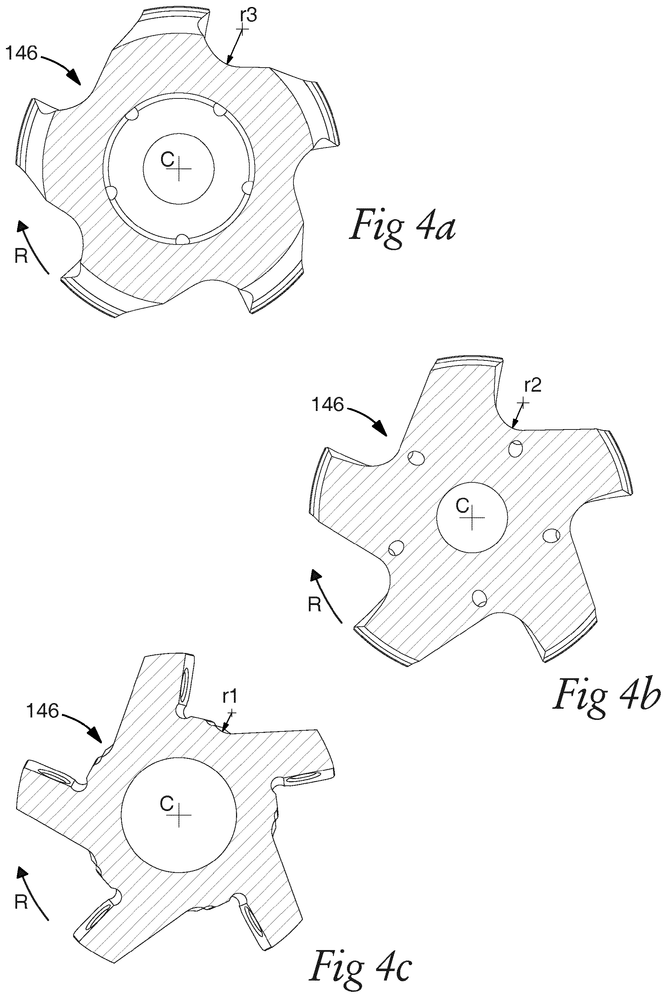

Fig. 4 shows cross sections from the milling tool 100 shown in Fig. 1. Each chip room 146 is delimited by a chip room surface comprising the trailing surface 158 of a first land portion 156, the leading surface 157 of a second land portion 156 and a bottom surface positioned between the trailing surface 158 and the leading surface 157. The first land portion 156 is here rotationally ahead of the second land portion. The smallest radius r of the curvature of each chip room 146 is shown at three different cross sections at varying distance from the front end 106 of the milling tool 100. The cross sections are perpendicular to the central axis C. The smallest radius r2 in a second cross section and the smallest radius r3 in a third cross section are larger than the smallest radius r1 in a first cross section. The first cross section is axially forward of the second cross section and the third cross section.

This configuration alleviates the problem of improving the strength of the milling tool while still having a milling tool with a chip room 146 large enough for accommodating a cutting insert 114. The relatively small radius r1 at the first cross section will enable having a deep chip room 146 in the area closest to the front end 106 of the milling tool 100, where the cutting inserts 114 are usually positioned, without removing too much material from the milling tool since the chip room 146 will be narrow due to the relatively small radius r1. This enables fitting the cutting inserts 114 within the chip room 146. Removing large amounts of material from the milling tool 100 decreases the strength of the milling tool. Having a relatively large radius r2, r3 at the second cross section and the third cross section will enable having a shallow chip room 146 in the area further from the front end 106 of the milling tool compared to the first cross section. Having larger radii and shallower chip rooms 146 in this area does not remove as much material from the milling tool in cross sections where strength is of utmost importance. A larger radius is also more resistant to crack initiation than a small radius is. The combination of having a relatively small radius r1 at the first cross section and larger radii r2, r3 at the second cross section and third cross section thus improves the strength of the milling tool while still having a chip room 146 large enough for accommodating a cutting insert 114.

The bottom surface of the chip room 146 is the part of each cross section perpendicular to the central axis C where the trailing surface 158 and leading surface 157 meet. The curvature with the smallest radius r, in each cross section, of each chip room surface is found in the bottom surface of the chip room 146. The bottom surface is preferably also the part, of each cross section, closest to the central axis C of the milling tool 100.

Preferably, the first cross section is positioned axially along the axial length of the insert seat 110 and the second cross section and the third cross section are positioned axially farther from the front end 106 than the axial length of the insert seat 110. Preferably, the smallest radius r3 in the third cross section is larger than the smallest radius r2 in the second cross section. The radii thus preferably have the relationship r3 > r2 > r1. The smallest radius r1, r2, r3 of the curvature of the chip room 146 thus increases when getting closer to the rear end 104 of the milling tool 100. Preferably, the smallest radius r is strictly increasing between the smallest radius r2 in the second cross section and the smallest radius r3 in the third cross section. More preferably, the smallest radius r increases linearly between the smallest radius r2 in the second cross section and the smallest radius r3 in the third cross section.

The axial length of the insert seat 110 refers to the axial distance along which the insert seat 110 has its extension.

In one embodiment the smallest radius r1 in the first cross section is approximately constant along the whole axial length of the insert seat 110. Preferably, the smallest radius r3 in the third cross section is between 2 and 10 mm. More preferably, the smallest radius r3 in the third cross section is 2 - 4 times larger than the smallest radius r1 in a first cross section.

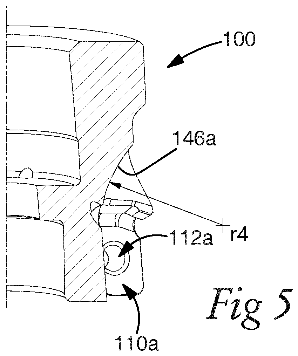

As shown in Fig. 5, the depth of the chip room 146 at the third cross section is smaller than the depth of the chip room at the first cross section.

The depth is defined in each cross section as the shortest distance from the bottom surface of the chip room surface to an imaginary circumferential extension of the peripheral envelope surface 108 of the milling tool 100, i.e. the circular arc obtained when two adjacent land portions 156 are connected by an imaginary arc.

This configuration ensures that the chip room does not have an unnecessary depth in cross sections far from the front end of the milling tool. Smaller depth of the chip room increases the strength of the milling tool.

The radial distance from the central axis C of the milling tool 100 to the bottom surface is further larger at the third cross section compared to at the first cross section.

Preferably, the bottom surface of the chip room 146 in all cross sections between the second cross and the third cross section has the shape of a circular arc r4 in a cross section substantially parallel to the lengthwise direction of the chip room 146.

The lengthwise direction of the chip room 146 is the direction of a line that passes through the smallest radius r2 at the second cross section and the smallest radius r3 at the third cross section.

This configuration enables a smooth transition from a chip room 146 with a relatively large depth close to the front end 106 of the milling tool 100 to a chip room with a relatively small depth axially farther from the front end of the milling tool 100. This smooth transition minimizes the risk for crack initiation points.

As shown in Fig. 1 the chip room 146 preferably extends, in the circumferential direction, to an area located in the imaginary axial extension of the insert seat 110.

The imaginary axial extension refers to the area that occupies the same circumferential position as the insert seat 110 and is axially further from the front end 106 than the insert seat 110.

This configuration ensures that there is enough chip room space in the direct axial vicinity of the insert seat 110 and therefore also implicitly in the axial extension of the cutting inserts 114 where a large enough chip room 146 is necessary to effectively transport the chips away from the worked surface.

The shape of the chip room 146 as disclosed in this document is made possible by free form ball nose milling.

The differential pitch invention disclosed in connection with figures 1 to 3 may be combined with the invention related to the form of the chip room 146 as disclosed in connection with figures 1, 4 and 5 to achieve a milling tool with the combined advantages of these ideas.

The invention is shown incorporated on a milling tool 100 with five cutting inserts 114. It is however equally possible to implement embodiments of the invention on milling tools 100 having other number of cutting inserts 114, such as, but not limited to, 8, 10, 12 or 20. The minimum number of cutting inserts 114 is three.

The invention is shown incorporated on an end milling tool. Some of the embodiments shown are however equally possible to implement on a slot milling tool.

## Claims

1. A metal cutting milling tool (100), comprising:
a body that is rotatable around a central axis (C) in a rotational direction; wherein the body comprises
a front end (106),
- a plurality of land portions (156) extending axially rearwards from the front end (106),
- a plurality of chip rooms (146) extending axially rearwards from the front end,
wherein
- each chip room (146) of the plurality of chip rooms is positioned between two adjacent land portions (156) of the plurality of land portions;
- each land portion (156) of the plurality of land portions is delimited by a leading (157) and a trailing surface (158) as seen in the rotational direction, and wherein each land portion (156) as part of the leading surface (157) in a radially outer and forward region, comprises an insert seat (110) for receiving a cutting insert (114);
- at the front end (106) of the milling tool (100), in a plane perpendicular to the central axis (C), an angle between a radius intersecting a radially outer point in the insert seat (110) of a first land portion (156) and a radius intersecting a corresponding point in the insert seat (110) of a second land portion (156) defines a seat pitch angle (α) for the first land portion (156), and wherein the first land portion and a second land portion (156) are adjacent consecutive land portions in the rotational direction,
- at least three different land portions (156) of the plurality of land portions have seat pitch angles (α) that differ in value, and wherein
- at the front end (106) of the milling tool (100), each land portion (156) has a respective arc length (AL) defined by the circumferential distance along the radial periphery of the milling tool (100) between the insert seat (110) and the trailing surface (158) for respective land portion (156),
**characterized in that**
the longest arc length (AL) is at most 10 % longer than the shortest arc length (AL).

2. The metal cutting milling tool according to claim 1, **wherein** the metal cutting milling tool (100) further comprises cutting inserts (114) that are positioned one in each of the insert seats (110) and wherein all the cutting inserts (114) are identical.

3. The metal cutting milling tool according to claim 2, **wherein** at the front end (106) of the milling tool (100), in a plane perpendicular to the central axis (C), a line parallel to the upper side of a cutting insert (114) and a line parallel to the trailing surface (158), associated with the same chip room (146) as the cutting insert (114), of the adjacent land portion (156), defines an opening angle (γ) for respective cutting insert (114), and wherein at least three of the opening angles (γ) differ in value.

4. The metal cutting milling tool according to claim 3, **wherein** all opening angles (γ) are within 60 - 100°.

5. The metal cutting milling tool according to any of the previous claims, **wherein** the insert seats (110) each comprise a screw hole (112) for fixing one of the cutting inserts (114) and in that the screw hole (112) extends transverse to the insert seat (110), wherein all screw holes (112) are through holes.

6. The metal cutting milling tool according to claim 5, **wherein** all screw holes (112) extend from a chip room (146) to an adjacent chip room (146) in the rotational direction.

7. The metal cutting milling tool according to any of claims 5 or 6, **wherein** the longest screw hole (112) is at most 10 % longer than the shortest screw hole (112).

8. The metal cutting milling tool according to any of the preceding claims, **wherein** the longest arc length (AL) is at most 5 % longer than the shortest arc length (AL).

9. The metal cutting milling tool according to any of claims 2, 3 or 4, **wherein** the shortest arc length (AL) is at least as long as the thickness of the cutting inserts (114).

10. The metal cutting milling tool according to any one of the preceding claims, **wherein** the largest seat pitch angle (α) is at least 5° larger than the smallest seat pitch angle (α).

11. The metal cutting milling tool according to any one of the preceding claims, **wherein** the largest seat pitch angle (α) is at least 8° larger than the smallest seat pitch angle (α).

12. The metal cutting milling tool according to any of the preceding claims, **wherein** all seat pitch angles (α) have different values.

13. The metal cutting milling tool according to any of claims 2 or 3, **wherein** all the cutting inserts (114) are positioned at the same radial distance from the central axis (C).

14. The metal cutting milling tool according to any of the preceding claims, wherein the milling tool is an end milling tool.

15. The metal cutting milling tool according to any of claims 1-13, wherein the milling tool is a slot milling tool.

## Patentansprüche

1. Fräswerkzeug (100) zur Metallzerspanung, umfassend:
einen Körper, der um eine Mittelachse (C) in einer Drehrichtung drehbar ist; wobei der Körper umfasst
- ein vorderes Ende (106),
- eine Mehrzahl von Stegabschnitten (156), die sich von dem vorderen Ende (106) axial nach hinten erstrecken,
- eine Mehrzahl von Spanräumen (146), die sich von dem vorderen Ende axial nach hinten erstrecken,
wobei
- jeder Spanraum (146) der Mehrzahl von Spanräumen zwischen zwei benachbarten Stegabschnitten (156) der Mehrzahl von Stegabschnitten angeordnet ist;
- jeder Stegabschnitt (156) der Mehrzahl von Stegabschnitten in der Drehrichtung gesehen durch eine vorlaufende (157) und eine nachlaufende Fläche (158) begrenzt ist, und wobei jeder Stegabschnitt (156) als Teil der vorlaufenden Fläche (157) in einem radial äußeren und vorderen Bereich einen Schneideinsatzsitz (110) zum Aufnehmen eines Schneideinsatzes (114) umfasst;
- an dem vorderen Ende (106) des Fräswerkzeugs (100), in einer Ebene senkrecht zu der Mittelachse (C), ein Winkel zwischen einem Radius, der einen radial äußeren Punkt in dem Schneideinsatzsitz (110) eines ersten Stegabschnitts (156) schneidet, und einem Radius, der einen entsprechenden Punkt in dem Schneideinsatzsitz (110) eines zweiten Stegabschnitts (156) schneidet, einen Sitzteilungswinkel (α) für den ersten Stegabschnitt (156) definiert, und wobei der erste Stegabschnitt und ein zweiter Stegabschnitt (156) in der Drehrichtung benachbarte aufeinanderfolgende Stegabschnitte sind,
- mindestens drei unterschiedliche Stegabschnitte (156) der Mehrzahl von Stegabschnitten Sitzteilungswinkel (a) aufweisen, die sich hinsichtlich ihres Wertes unterscheiden, und wobei
- an dem vorderen Ende (106) des Fräswerkzeugs (100) jeder Stegabschnitt (156) eine jeweilige Bogenlänge (AL) aufweist, die durch den Umfangsabstand entlang des radialen Umfangs des Fräswerkzeugs (100) zwischen dem Schneideinsatzsitz (110) und der nachlaufenden Fläche (158) für den jeweiligen Stegabschnitt (156) definiert ist,
**dadurch gekennzeichnet, dass**
die längste Bogenlänge (AL) höchstens 10 % länger als die kürzeste Bogenlänge (AL) ist.

2. Fräswerkzeug zur Metallzerspanung nach Anspruch 1, wobei das Fräswerkzeug (100) zur Metallzerspanung ferner Schneideinsätze (114) umfasst, von denen jeweils einer in jedem der Schneideinsatzsitze (110) angeordnet ist, und wobei alle Schneideinsätze (114) identisch sind.

3. Fräswerkzeug zur Metallzerspanung nach Anspruch 2, wobei an dem vorderen Ende (106) des Fräswerkzeugs (100), in einer Ebene senkrecht zu der Mittelachse (C), eine Linie parallel zu der Oberseite eines Schneideinsatzes (114) und eine Linie parallel zu der nachlaufenden Fläche (158), die demselben Spanraum (146) wie der Schneideinsatz (114) zugeordnet ist, des benachbarten Stegabschnitts (156), einen Öffnungswinkel (γ) für den jeweiligen Schneideinsatz (114) definiert, und wobei sich mindestens drei der Öffnungswinkel (γ) hinsichtlich ihres Wertes unterscheiden.

4. Fräswerkzeug zur Metallzerspanung nach Anspruch 3, wobei alle Öffnungswinkel (γ) innerhalb 60 - 100° liegen.

5. Fräswerkzeug zur Metallzerspanung nach einem der vorhergehenden Ansprüche, wobei die Schneideinsatzsitze (110) jeweils ein Schraubenloch (112) zum Befestigen eines der Schneideinsätze (114) umfassen und dadurch, dass sich das Schraubenloch (112) quer zu dem Schneideinsatzsitz (110) erstreckt, wobei alle Schraubenlöcher (112) Durchgangslöcher sind.

6. Fräswerkzeug zur Metallzerspanung nach Anspruch 5, wobei sich alle Schraubenlöcher (112) von einem Spanraum (146) zu einem in der Drehrichtung benachbarten Spanraum (146) erstrecken.

7. Fräswerkzeug zur Metallzerspanung nach einem der Ansprüche 5 oder 6, wobei das längste Schraubenloch (112) höchstens 10 % länger als das kürzeste Schraubenloch (112) ist.

8. Fräswerkzeug zur Metallzerspanung nach einem der vorhergehenden Ansprüche, wobei die längste Bogenlänge (AL) höchstens 5 % länger als die kürzeste Bogenlänge (AL) ist.

9. Fräswerkzeug zur Metallzerspanung nach einem der Ansprüche 2, 3 oder 4, wobei die kürzeste Bogenlänge (AL) mindestens so lang wie die Dicke der Schneideinsätze (114) ist.

10. Fräswerkzeug zur Metallzerspanung nach einem der vorhergehenden Ansprüche, wobei der größte Sitzteilungswinkel (α) mindestens 5° größer als der kleinste Sitzteilungswinkel (α) ist.

11. Fräswerkzeug zur Metallzerspanung nach einem der vorhergehenden Ansprüche, wobei der größte Sitzteilungswinkel (α) mindestens 8° größer als der kleinste Sitzteilungswinkel (α) ist.

12. Fräswerkzeug zur Metallzerspanung nach einem der vorhergehenden Ansprüche, wobei alle Sitzteilungswinkel (α) unterschiedliche Werte aufweisen.

13. Fräswerkzeug zur Metallzerspanung nach einem der Ansprüche 2 oder 3, wobei alle Schneideinsätze (114) in demselben radialen Abstand von der Mittelachse (C) angeordnet sind.

14. Fräswerkzeug zur Metallzerspanung nach einem der vorhergehenden Ansprüche, wobei das Fräswerkzeug ein Stirnfräswerkzeug ist.

15. Fräswerkzeug zur Metallzerspanung nach einem der Ansprüche 1-13, wobei das Fräswerkzeug ein Nutfräswerkzeug ist.

## Revendications

1. Outil de fraisage pour coupe de métal (100), comprenant :
un corps qui est apte à tourner autour d'un axe central (C) dans un sens de rotation ; lequel corps comprend
une extrémité avant (106),
- une pluralité de portions de listel (156) s'étendant axialement vers l'arrière à partir de l'extrémité avant (106),
- une pluralité de chambres à copeaux (146) s'étendant axialement vers l'arrière à partir de l'extrémité avant,
dans lequel
- chaque chambre à copeaux (146) de la pluralité de chambres à copeaux est positionnée entre deux portions de listel adjacentes (156) de la pluralité de portions de listel ;
- chaque portion de listel (156) de la pluralité de portions de listel est délimitée par une surface d'attaque (157) et une surface de fuite (158) vues dans le sens de rotation, et chaque portion de listel (156), en tant que partie de la surface d'attaque (157) dans une région radialement externe et avant, comprend un logement d'insert (110) pour recevant une plaquette de coupe (114) ;
- à l'extrémité avant (106) de l'outil de fraisage (100), dans un plan perpendiculaire à l'axe central (C), un angle entre un rayon qui intersecte un point radialement externe dans le logement d'insert (110) d'une première portion de listel (156) et un rayon qui intersecte un point correspondant dans le logement d'insert (110) d'une seconde portion de listel (156) définit un angle de pas de logement (α) pour la première portion de listel (156), et la première portion de listel et une seconde portion de listel (156) sont des portions de listel adjacentes et consécutives dans le sens de rotation,
- au moins trois portions de listel différentes (156) de la pluralité de portions de listel ont des angles de pas de logement (α) qui diffèrent en valeur, et dans lesquels
- à l'extrémité avant (106) de l'outil de fraisage (100), chaque portion de listel (156) a une longueur d'arc (AL) respective définie par la distance circonférentielle le long de la périphérie radiale de l'outil de fraisage (100) entre le logement d'insert (110) et la surface de fuite (158) pour la portion de listel respective (156),
**caractérisé en ce que**
la plus longue longueur d'arc (AL) est au plus 10 % plus longue que la plus courte longueur d'arc (AL).

2. Outil de fraisage pour coupe de métal selon la revendication 1, **caractérisé en ce que** l'outil de fraisage pour coupe de métal (100) comprend en outre des plaquettes de coupe (114) qui sont positionnées à raison d'une dans chacun des logements d'insert (110) et **en ce que** toutes les plaquettes de coupe (114) sont identiques.

3. Outil de fraisage pour coupe de métal selon la revendication 2, dans lequel à l'extrémité avant (106) de l'outil de fraisage (100), dans un plan perpendiculaire à l'axe central (C), une ligne parallèle au côté supérieur d'une plaquette de coupe (114) et une ligne parallèle à la surface de fuite (158), associée à la même chambre à copeaux (146) que la plaquette de coupe (114), de la portion de listel adjacente (156), définit un angle d'ouverture (γ) pour la plaquette de coupe respective (114), et lequel au moins trois des angles d'ouverture (γ) diffèrent en valeur.

4. Outil de fraisage pour coupe de métal selon la revendication 3, dans lequel tous les angles d'ouverture (γ) sont compris entre 60 et 100°.

5. Outil de fraisage pour coupe de métal selon l'une quelconque des revendications précédentes, dans lequel les logements d'insert (110) comprennent chacun un trou de vis (112) pour la fixation d'une des plaquettes de coupe (114) et en ce que le trou de vis (112) s'étend transversalement au logement d'insert (110), lequel tous les trous de vis (112) sont des trous traversants.

6. Outil de fraisage pour coupe de métal selon la revendication 5, dans lequel tous les trous de vis (112) s'étendent d'une chambre à copeaux (146) à une chambre à copeaux adjacente (146) dans le sens de rotation.

7. Outil de fraisage pour coupe de métal selon l'une quelconque des revendications 5 ou 6, dans lequel le plus long trou de vis (112) est au plus 10 % plus long que le plus court trou de vis (112).

8. Outil de fraisage pour coupe de métal selon l'une quelconque des revendications précédentes, dans lequel la plus longue longueur d'arc (AL) est au plus 5 % plus longue que la plus courte longueur d'arc (AL).

9. Outil de fraisage pour coupe de métal selon l'une quelconque des revendications 2, 3 ou 4, dans lequel la plus courte longueur d'arc (AL) est au moins aussi longue que l'épaisseur des plaquettes de coupe (114).

10. Outil de fraisage pour coupe de métal selon l'une quelconque des revendications précédentes, dans lequel le plus grand angle de pas de logement (α) est d'au moins 5° supérieur au plus petit angle de pas de logement (α).

11. Outil de fraisage pour coupe de métal selon l'une quelconque des revendications précédentes, dans lequel le plus grand angle de pas de logement (α) est d'au moins 8° supérieur au plus petit angle de pas de logement (α).

12. Outil de fraisage pour coupe de métal selon l'une quelconque des revendications précédentes, dans lequel tous les angles de pas de logement (α) ont des valeurs différentes.

13. Outil de fraisage pour coupe de métal selon l'une quelconque des revendications 2 ou 3, dans lequel toutes les plaquettes de coupe (114) sont positionnées à la même distance radiale de l'axe central (C).

14. Outil de fraisage pour coupe de métal selon l'une quelconque des revendications précédentes, dans lequel l'outil de fraisage est une fraise en bout.

15. Outil de fraisage pour coupe de métal selon l'une quelconque des revendications 1 à 13, dans lequel l'outil de fraisage est un outil de fraisage à rainurer.
